# EUROPÄISCHE PATENTSCHRIFT

(11) **EP 0 899 898 B1**
(45) Veröffentlichungstag und Bekanntmachung des Hinweises auf die Patenterteilung: **12.05.2004**
(21) Anmeldenummer: 98116215.9
(22) Anmeldetag: 27.08.1998
(51) Int. Cl.: H04B 7/26, G08G 1/00, G08C 17/02

(54) **Datensignal zur funkgestützten Übertragung von Daten zwischen Verkehrsdatensammelmodulen und zumindest einer Zentraleinheit**
Data signal for wireless transmission of data between collecting moduls of traffic data and at least a central unit
Signal de données pour transmission sans fil de données entre des modules collecteurs de données de traffic et au moins une unité centrale

(30) Priorität: 29.08.1997 DE 19737844
(43) Veröffentlichungstag der Anmeldung: 03.03.1999
(73) Patentinhaber: SIEMENS AKTIENGESELLSCHAFT, 80333 München (DE)
(72) Erfinder: Hahn, Ulrich, 82515 Wolfratshausen (DE); Christmann, Werner, 53604 Bad Honnef (DE)

(56) Entgegenhaltungen:
- WO-A-93/04451
- DE-A- 3 519 531
- DE-C- 4 105 584

## Beschreibung

Die Erfindung bezieht sich auf ein Datensignal zur funkgestützten Übertragung von Daten zwischen Verkehrsdatensammelmodulen und zumindest einer Zentraleinheit.

Der in den letzten Jahren stark angestiegene Kraftfahrzeugverkehr hat es erforderlich gemacht, Daten über den Verkehrsfluß zu erfassen, auszuwerten und in Abhängigkeit von den ausgewerteten Daten Maßnahmen zu ergreifen, um den Verkehrsfluß zu optimieren.

Da ein derartiges Überwachungs- und Leit- bzw. Informationssystem für die Verkehrsbeeinflussung und/oder für die Verkehrsteilnehmerinformation aus einer Vielzahl von Verkehrsdatensammelmodulen und einer geringeren Anzahl von Zentraleinheiten besteht, die im wesentlichen der Auswertung und der Vorgabe von Einflußnahmen auf den Verkehrsfluß dienen, ist es erforderlich, daß eine Vielzahl von Daten zwischen den Verkehrsdatensammelmodulen und zumindest einer Zentraleinheit übermittelt werden müssen.

Der Erfindung liegt die Aufgabe zugrunde, ein Datensignal zu schaffen, mittels dem durch ein einheitliches Protokoll Verkehrsdaten zwischen externen Verkehrsdatensammelmodulen und zumindest einer Zentraleinheit übertragen werden können.

Diese Aufgabe wird erfindungsgemäß gelöst durch ein Datensignal zur funkgestützten Übertragung von Daten zwischen Verkehrsdatensammelmodulen und zumindest einer Zentraleinheit, mit einem STX (Start of Text)-Zeichen zu Beginn des Datensignals, einem Identifikations-Signalteil, mittels dem das sendende bzw. das empfangende Verkehrsdatensammelmodul identifizierbar ist, einem Informationsbyte-Signalteil, mittels dem durch die Zentraleinheit und das beteiligte Verkehrsdatensammelmodul Quittungen und Statusinformationen austauschbar sind, einem Auftragsnummer-Signalteil, das in Aufrufrichtung als Auftragskennzeichen und in Antwortrichtung als Quittungskennzeichen fungiert, einem Wechsel-Signalteil, das in Aufrufrichtung ignoriert wird und in Antwortrichtung bei jedem abgesendeten Datensignal wechselt, einem Modemnachlaufzeit-Signalteil, das in Aufrufrichtung als Parameter und in Antwortrichtung als Statusinformation dient, einem Daten-Signalteil, das zumindest ein Datenkennzeichen und je Datenkennzeichen einen Datenblock aufweist, einem ETX (End of Text)-Zeichen, und einem Prüfzeichen, welches aus den auf das STX-Zeichen folgenden Signalteilen gebildet ist, wobei eine auf sieben Bits reduzierte XOR-Verknüpfung aller Signalteile zwischen dem STX-Zeichen und dem ETX-Zeichen erfolgt und wobei bei allen Signalteilen zwischen dem STX-Zeichen und dem ETX-Zeichen sowie beim Prüfzeichen das MSB (Most Significant Bit) fest auf den Wert "1" gesetzt ist.

Vorteilhaft ist das Identifikations-Signalteil als dem sendenden bzw. dem empfangenden Verkehrsdatensammelmodul zugeordnete, vorzugsweise vierstellige, Identifikationsnummer ausgebildet. In Aufrufrichtung dient das Identifikations-Signalteil als Zieladresse, in Antwortrichtung als Quelladresse.

Bei einer Ausführungsform des erfindungsgemäßen Datensignals kann der Datenblock als Verkehrsdatenblock ausgestaltet sein, der zumindest einen Meßwertblock aufweist. Der Verkehrsdatenblock beginnt immer mit der Anzahl der nachfolgenden Meßwertblöcke. Jeder Meßwertblock seinerseits beginnt mit einem Zeitstempel der Erfassungszeit, wobei diese mit dem Wochentag anfängt, gefolgt von Stunde und Minute. Das nachfolgende Byte kennzeichnet die Anzahl der Datenerfassungseinheiten, wobei zumindest eine derartige Datenerfassungseinheit vorgesehen ist. Für jede Datenerfassungseinheit folgen nun vierzehn Byte, wobei mit der Adreßangabe der Datenerfassungseinheit begonnen wird. Darauf folgen nacheinander die Angabe der erfaßten Kraftfahrzeuge, wieviele der erfaßten Kraftfahrzeuge Personenkraftwagen waren und wieviele der erfaßten Kraftfahrzeuge Lastkraftwagen waren. Danach folgt die Durchschnittsgeschwindigkeitsangabe der Personenkraftwagen, die vorzugsweise aufgrund der maximalen Wertigkeit auf 2 Bytes aufgeteilt sind. Im ersten dieser beiden Byte erhalten die Bits 0 bis 3 die Wertigkeit der vier höchstwertigen Bits 4 bis 7 der Durchschnittsgeschwindigkeitsangaben von Personenkraftwagen. Das zweite dieser beiden Bits enthält die vier niederwertigsten Bits 0 bis 3 der Durchschnittsgeschwindigkeitsangaben der Personenkraftwagen. Daraufhin folgen die Durchschnittsgeschwindigkeitsangaben der Lastkraftwagen, die vorzugsweise wie im Falle der Durchschnittsgeschwindigkeitsangaben von Personenkraftwagen auf 2 Bytes verteilt werden. Daraufhin folgt die Standardabweichung der erfaßten Kraftfahrzeuggeschwindigkeiten, die vorzugsweise ebenfalls in der vorstehend bereits beschriebenen Weise in 2 Bytes abgebildet werden. Die Belegung B folgt unmittelbar nach der Standardabweichung der Kraftfahrzeuggeschwindigkeiten in einem Byte. Daraufhin folgen Angaben über die Fehler, die bei der Erfassung festgestellt wurden, wobei als erstes die Anzahl von Längenfehlern und dann die Anzahl von Belegungsfehlern aufgeführt sind. Der Datenblock endet mit einer Statusangabe der betreffenden Meßstelle.

Bei einer weiteren Ausführungsform kann der Datenblock des erfindungsgemäßen Datensignals als Statusblock ausgebildet sein. Dieser beginnt mit einem Zeitstempel, bestehend aus Wochentag, gefolgt von Stunde und Minute. Nun muß der Statusblock gekennzeichnet werden. Die Kennzeichnung kann wieder Anlauf oder spontane Statusmeldung bedeuten. Nach der Kennzeichnung folgen der Status einer angeschlossenen Funkuhr sowie 2 Reservebytes für Signalerweiterungen. Es folgen die aktuell am Verkehrsdatensammelmodul eingestellten Parameter, nämlich zuerst für den Grenzwert für die maximale Personenkraftwagengeschwindigkeit, dann für den Grenzwert für die maximale Lastkraftwagengeschwindigkeit und dann für den. Längengrenzwert von Personenkraftwagen. Die letztgenannten Grenzwerte müssen jeweils auf 2 Bytes aufgeteilt werden, wobei die Aufteilung in der bereits im Zusammenhang mit den Durchschnittsgeschwindigkeiten von Personenkraftwagen beschriebenen Weise erfolgt. Der Statusblock ist Bestandteil eines erfindungsgemäßen Datensignals, welches von einem der Verkehrsdatensammelmodule an die Zentraleinheit gerichtet ist.

Zur Parametereinstellung ist das erfindungsgemäße Datensignal mit einem Datenblock versehen, der im Datensignal von der Zentraleinheit an das Verkehrsdatensammelmodul mit dem Funktionscode "P" gekennzeichnet und als Parametrierungsblock ausgebildet ist. Dieser Parametrierungsblock besteht aus dem Grenzwert für die maximale Personenkraftwagengeschwindigkeit, dem Grenzwert für die maximale Lastkraftwagengeschwindigkeit und dem Längengrenzwert für Personenkraftwagen. Die letztgenannten Werte müssen in der bereits beschriebenen und in bezug genommenen Weise jeweils auf 2 Bytes aufgeteilt werden.

Darüber hinaus ist es auch möglich, das erfindungsgemäße Datensignal als Statusabfragesignal ohne Datenblock auszubilden, deren Kennzeichnung im Kopfteil des Datensignals erfolgt.

Im folgenden wird die Erfindung an Hand von Ausführungsbeispielen näher erläutert.

In einer ersten Ausführungsform dient das erfindungsgemäße Datensignal zur Übermittlung von an einem Verkehrsdatensammelmodul erfaßten Verkehrsdaten vom Verkehrsdatensammelmodul zu einer Zentraleinheit.

Das Datensignal ist grundsätzlich umgeben von einem STX-ETX-Rahmen, der mit einem Prüfsummenzeichen PCC abgeschlossen ist.

Das Prüfsummenzeichen wird über eine XOR-Verknüpfung über alle Signalteile bzw. Zeichen des Datensignals ohne das STX-Zeichen gebildet, reduziert auf 7-Bit. Vor Beginn der Übermittlung an die Zentraleinheit wird dann das Bit 7 (Most Significant Bit) des Prüfsummenzeichens fest auf 1 gesetzt.

Alle Zeichen bzw. Signalteile zwischen dem STX-Zeichen und dem ETX-Zeichen haben das MSB (Most Significant Bit) gesetzt.

Die Struktur eines derartigen Datensignals ergibt sich aus der folgenden Tabelle, in deren erster Spalte die Byte-Nummer, in deren zweiter Spalte die Wertebereiche der Signalseite und in deren dritter Spalte die Bedeutung des jeweiligen Signalteils angegeben ist.

| Byte Nr. | Wertebereich | Bedeutung |
|---|---|---|
| 1 | 80h...89h | AM-ID(Quelle)Tausenderstelle |
| 2 | 80h...89h | AM-ID(Quelle)Hunderterstelle |
| 3 | 80h...89h | AM-ID(Quelle)Zehnerstelle |
| 4 | 80h...89h | AM-ID(Quelle)Einerstelle |
| 5 | 80h...FFh | Infobyte Bit 0 = 0/1 = Quittierung des Parametertelegramms Bit 1 = 0/1 = Übertragungsfehler Bit 2 = 0 nicht definiert |
| | | Bit 3 = 0 nicht definiert |
| | | Bit 4 = 0 nicht definiert |
| | | Bit 5 = 0 nicht definiert |
| | | Bit 6 = 0 nicht definiert |
| | | Bit 7 = 1 fest vorgegeben |
| 6 | 80h...FFh | Jobnummer |
| 7 | 80h/91h | Modacom-Toggel-Byte |
| 8 | 80h/85h...94h | Timeoutzeit für Modemabschaltzeit |
| 9 | C1h...DAh | 'A'...'Z' Funktionscode des Telegramms |
| ... | ... | Beginn der zum Funktionscode gehörenden Datenblock |

Hierbei steht AM-ID für die Identifikationsnummer des betreffenden Verkehrsdatensammelmoduls; die in der Tabelle angegeben Job-Nummer ist gleichbedeutend mit der Auftragsnummer, die durch ein von der Zentraleinheit abgesetztes Signal vergeben ist und die in dem nunmehr von dem Verkehrsdatensammelmodul an die Zentraleinheit übermittelten Signal als Quittung mit übertragen wird.

Gemäß einer weiteren erfindungsgemäßen Ausführungsform dient das Datensignal zur Übermittlung von Daten von der Zentraleinheit an ein bestimmtes Verkehrsdatensammelmodul. Auch ein derartiges Datensignal ist grundsätzlich von einem STX-ETX-Rahmen umgeben, der von einem Prüfsummenzeichen abgeschlossen ist. Das Prüfsummenzeichen bildet sich aus einer XOR-Verknüpfung über alle Zeichen und Signalteile des Datensignals mit Ausnahme des STX-Zeichens, reduziert auf 7-Bit. Vor der Übermittlung an das Verkehrsdatensammelmodul wird dann das Bit 7 (MSB) des Prüfsummenzeichens fest auf 1 gesetzt. Alle Zeichen bzw. Signalteile innerhalb des STX-ETX-Rahmens haben das MSB gesetzt.

Wie sich aus der folgenden Darstellung ergibt, entspricht die Struktur des Datensignals der vorstehend beschriebenen Ausführungsform des Datensignals zur Übermittlung von Daten von einem Verkehrsdatensammelmodul an eine Zentraleinheit.

| Byte Nr. | Wertebereich | Bedeutung |
|---|---|---|
| 1 | 80h...89h | AM-ID(Ziel)Tausenderstelle |
| 2 | 80h...89h | AM-ID(Ziel)Hunderterstelle |
| 3 | 80h...89h | AM-ID(Ziel)Zehnerstelle |
| 4 | 80h...89h | AM-ID(Ziel)Einerstelle |
| 5 | 80h...FFh | Infobyte |
| | | Bit 0 = 0 nicht definiert |
| | | Bit 1 = 0 nicht definiert |
| | | Bit 2 = 0 nicht definiert |
| | | Bit 3 = 0 nicht definiert |
| | | Bit 4 = 0 nicht definiert |
| | | Bit 5 = 0 nicht definiert |
| | | Bit 6 = 0 nicht definiert |
| | | Bit 7 = 1 fest vorgegeben |
| 6 | 80h...FFh | Jobnummer |
| 7 | 80h | Reserve |
| 8 | 80h/85h...94h | Timeoutzeit für Modemabschaltzeit |
| 9 | C1h...DAh | 'A'...'Z' Funktionscode des Telegramms |
| ... | ... | Beginn der zum Funktionscode gehörenden Datenblock |

Im folgenden wird ein zu dem Funktionscode "V" gehörender Verkehrsdatenblock hinsichtlich seines Aufbaus beschrieben.

| Byte-Nr. | Wertebereich | Bedeutung |
|---|---|---|
| 1 | 81h...85h | Anzahl der nachfolgenden Meßwert-Blöcke (1...5) |
| 2 | 80h..86h | Wochentag(Sonntag = 0, Montag = 1, Samstag = 6)/Meßzeit (siehe Hinweis) |
| 3 | 80h...97h | Stunde/Meßzeit (0...23) |
| 4 | 80h...BBh | Minute/Meßzeit (0...59) |
| 5 | 81h...86h | Anzahl der nachfolgenden DE-Blöcke (1...6) |
| 6 | 81h...E3h | DE-Kanal (1...99) |
| 7 | 80h...E3h | Q-KFZ (0...99) |
| 8 | 80h...E3h | Q-PKW (0...99) |
| 9 | 80h...E3h | Q-LKW (0...99) |
| 10 | 80h...8Fh | High-Nibbel von V-PKW |
| 11 | 80h...8Fh | Low-Nibbel von V-PKW |
| 12 | 80h...8Fh | High-Nibbel von V-LKW |
| 13 | 80H...8Fh | Low-Nibbel von V-LKW |
| 14 | 80h...8Fh | High-Nibbel von SV (V-KFZ) |
| 15 | 80h...8Fh | Low-Nibbel von SV (V-KFZ) |
| 16 | 80h...E4h | B in % (0...100) |
| 17 | 80h...E3h | Fehler: Keine Länge (0...99) |
| 18 | 80h...E3h | Fehler: Keine Belegung (0...99) |
| 19 | 80h...FFh | Status der Meßstelle (80h = OK/ Weitere Definitionen folgen noch) (Bit-Codiert) |
| ... | ... | n. DE-Block |
| ... | ... | n. Meßwert-Block |

Der Verkehrsdatenblock beginnt immer mit einem Byte, in dem die Anzahl der nachfolgenden Meßwertblöcke angegeben wird. Jeder Meßwertblock seinerseits beginnt mit einem Zeitstempel der gesammelten Verkehrsdaten. Im Anschluß daran folgt die Anzahl der Datenerfassungsblöcke, die übertragen werden. Ein Datenerfassungsblock besitzt dabei eine feste Länge von 14 Bytes.

Mittels des Zeitstempels wird die Meßzeit angegeben, die der Minute entspricht, in der die Verkehrsdaten gesammelt wurden. Beispielsweise handelt es sich bei der Meßzeit 9.07 Uhr um die Verkehrsdaten für den Zeitraum von 9.07 Uhr 00 Sekunden bis 9.07 Uhr 59 Sekunden.

Hinsichtlich der in einem Datenerfassungs(DE)-Block angegebenen Abkürzungen gilt folgendes:

DE-Kanal steht für Datenerfassungs-Kanal. Im Falle des Verkehrsdatensammelmoduls kann dies ein Infrarotsensor zur Ermittlung von Geschwindigkeit und Länge eines Kraftfahrzeugs sein.

Q-KFZ bedeutet die Anzahl der ermittelten Kraftfahrzeuge.

Q-PKW bedeutet die Anzahl der ermittelten Personenkraftwagen.

Q-LKW bedeutet die Anzahl der erfaßten Lastkraftwagen.

High-Nibbel/Low-Nibbel erklärt sich wie folgt:
1 Byte besteht aus 8 Bit (Bit 0...7), wobei die höherwertigsten Bits (Bit 4..7) als sogenanntes High-Nibbel bezeichnet werden. Die 4 niederwertigsten Bits (Bit 0...3) werden als Low-Nibbel bezeichnet.

V-PKW steht für die ermittelte Durchschnittsgeschwindigkeit eines Personenkraftwagen.

V-LKW steht für die ermittelte Durchschnittsgeschwindigkeit eines Lastkraftwagen.

SV(V-KFZ) steht für die Standardabweichung der Kraftfahrzeuggeschwindigkeit. B in Prozent steht für Belegungszeit der Meßpunkte durch ein Kraftfahrzeug, wobei 100 % Belegung einer Minute entspricht.

Fehler: keine Länge Gibt die Anzahl von Fehlmessungen an, d.h., wie oft ein Detektor in einem Datensatz eine Länge von 0 liefert.

Fehler: keine Belegung Gibt die Anzahl von Fehlmessungen an, d.h., wie oft ein Detektor in einem Datensatz eine unplausible Belegung oder eine Belegung von 0 liefert.

Ein aktueller Statusblockfunktionsblock "S" dient dazu, vom Verkehrsdatensammelmodul dessen aktuell eingestellter Parameter an die Zentraleinheit zu übertragen; darüber hinaus wird in Byte Statusblockkennung übergeben, ob es sich um eine Quittierung oder eine spontane Meldung handelt.

Ein derartiger Statusblock hat die im folgenden angegebene Struktur:

| Byte-Nr. | Wertebereich | Bedeutung |
|---|---|---|
| 1 | 80h...86h | Wochentag (Sonntag = 0, Montag = 1, |
| | | ..., Samstag = 6) |
| 2 | 80h...97h | Stunde/Telegrammsendezeit |
| 3 | 80h...BBh | Minuten/Telegrammsendezeit |
| 4 | 81h...82h | Statusblockkennung |
| | | 1 = Wiederanlauf |
| | | 2 = Spontane Statusmeldung (Fehlerübergabe) |
| 5 | 80h...81h | Status Funkuhr 80h = Ausgefallen / 81h = OK |
| 6 | 80h | Reserve |
| 7 | 80h | Reserve |
| 8 | 80h...8Fh | High-Nibbel von V_max_P |
| 9 | 80h...8Fh | Low-Nibbel von V_max_P |
| 10 | 80h...8Fh | High-Nibbel von V-max_L |
| 11 | 80h...8Fh | Low-Nibbel von V_max_L |
| 12 | 80h...8Fh | High-Nibbel von L_PL |
| 13 | 80h...8Fh | Low-Nibbel von L_PL |

Hiebei bedeuten V_max_P die maximale Geschwindigkeit für Personenkraftwagen und V_max_L die maximale Geschwindigkeit für Lastkraftwagen.

L_PL bedeutet den Längengrenzwert für Personenkraftwagen/Lastkraftwagen. Kraftfahrzeuge, die diesen Längenwert überschreiten, werden als Lastkraftwagen gezählt.

Mit dem im folgenden angegebenen Parametrierungsfunktionscode "PB" können die Default-Werte des Verkehrsdatensammelmoduls überschrieben werden. Ein entsprechendes Datensignal wird von der Zentraleinheit an den betreffenden Verkehrsdatensammelmodul geschickt. Quittiert wird der Empfang dieses Datensignals im nächsten vom Verkehrsdatensammelmodul an die Zentraleinheit gesendeten Datensignal. Ein solcher Parametrierungsblock "P" hat die folgende Struktur:

| Byte-Nr. | Wertebereich | Bedeutung |
|---|---|---|
| 1 | 80h...8Fh | High-Nibbel von V_max_P |
| 2 | 80h...8Fh | Low-Nibbel von V_max_P |
| 3 | 80h...8Fh | High-Nibbel von V_max_L |
| 4 | 80h...8Fh | Low-Nibbel von V_max_L |
| 5 | 80h...8Fh | High-Nibbel von L_PL |
| 6 | 80h...8Fh | Low-Nibbel von L_PL |

Bei einem ebenfalls möglichen Statusabfragesignal ist kein Datenblock vorgesehen. Seine Kennzeichnung erfolgt im Kopfteil des Signals.

## Patentansprüche

1. Datensignal zur funkgestützten Übertragung von Daten zwischen Verkehrsdatensammelmodulen und zumindest einer Zentraleinheit, mit einem Start of Text-Zeichen (STX) zu Beginn des Datensignals, einem Identifikations-Signalteil, mittels dem das sendende bzw. das empfangende Verkehrsdatensammelmodul identifizierbar ist, einem Informationsbyte-Signalteil, mittels dem durch die Zentraleinheit und das beteiligte Verkehrsdatensammelmodul Quittungen und Statusinformationen austauschbar sind, einem Auftragsnummer-Signalteil, das in Aufrufrichtung als Auftragskennzeichen und in Antwortrichtung als Quittungskennzeichen fungiert, einem Wechsel-Signalteil, das in Aufrufrichtung ignoriert werden und in Antwortrichtung bei jedem abgesendeten Datensignal wechselt, einem Modemnachlaufzeit-Signalteil, das in Aufrufrichtung als Parameter und in Antwortrichtung als Statusinformation dient, einem Daten-Signalteil, das zumindest ein Datenkennzeichen und je Datenkennzeichen einen Datenblock aufweist, einem End of Text-Zeichen (ETX), und einem Prüfzeichen, welches aus den auf das STX-Zeichen folgenden Signalteilen gebildet ist, wobei eine auf sieben Bit reduzierte XOR-Verknüpfung aller Signalteile zwischen dem STX-Zeichen und dem ETX-Zeichen erfolgt und wobei bei allen Signalteilen zwischen dem STX-Zeichen und dem ETX-Zeichen sowie beim Prüfzeichen das Most Significant Bit (MSB) fest auf den Wert "1" gesetzt ist.

2. Datensignal nach Anspruch 1, dessen Identifikations-Signalteil als dem sendenden bzw. dem empfangenden Verkehrsdatensammelmodul zugeordnete, vorzugsweise vierstellige, Identifikationsnummer ausgebildet ist.

3. Datensignal nach Anspruch 1 oder 2, bei dem der Datenblock als Verkehrsdatenblock ausgebildet ist, der zumindest einen Meßwertblock und ein Zeichen für die Anzahl der vorhandenen Meßwertblöcke aufweist, wobei jeder Meßwertblock einen Zeitstempel für die Erfassungszeit, einen Byte für die Anzahl der zumindest einen zum Meßwertblock gehörenden Datenerfassungseinheit aufweist, wobei jede Datenerfassungseinheit vorzugsweise vierzehn Bytes aufweist, deren erster die Adreßangabe der Datenerfassungseinheit und deren weitere die Gesamtzahl der erfaßten Kraftfahrzeuge (Q-KFZ), die Gesamtzahl der erfaßten Personenkraftwagen (Q-PKW), die Gesamtzahl der erfaßten Lastkraftwagen (Q-LKW), die Durchschnittsgeschwindigkeit der erfaßten Personenkraftwagen (V-PKW), die Durchschnittsgeschwindigkeit der erfaßten Lastkraftwagen (V-LKW), die Standardabweichung der erfaßten Kraftfahrzeuggeschwindigkeiten (SV-V-KFZ), die Belegungszeit der Meßpunkte durch Kraftfahrzeuge, die Fehlmessungsanzahl bezüglich Erfassungen mit Null-Länge, unplausible und Null-Belegungen und einen Meßstellenstatus angeben.

4. Datensignal nach Anspruch 1, bei dem die Durchschnittsgeschwindigkeiten der erfaßten Personenkraftwagen (V-PKW) auf 2 Bytes aufgeteilt sind, wobei im ersten Byte die Bits 0 bis 3 die Wertigkeit der vier höchstwertigen Bits 4 bis 7 von V-PKW erhalten und im folgenden Byte die vier niederwertigsten Bits 0 bis 3 von V-PKW folgen.

5. Datensignal nach Anspruch 3 oder 4, bei dem die Durchschnittsgeschwindigkeiten der erfaßten Lastkraftwagen (V-LKW) auf 2 Bytes aufgeteilt sind, wobei im ersten Byte die Bits 0 bis 3 die Wertigkeit der vier höchstwertigen Bits 4 bis 7 von V-LKW erhalten und im folgenden Byte die vier niederwertigsten Bits 0 bis 3 von V-LKW folgen.

6. Datensignal nach einem der Ansprüche 3 bis 5, bei dem die Standardabweichungen der erfaßten Kraftfahrzeuggeschwindigkeiten (SV-V-KFZ) auf zwei Bytes aufgeteilt sind, wobei im ersten Byte die Bits 0 bis 3 die Wertigkeit der vier höchstwertigen Bits 4 bis 7 von SV-V-KFZ erhalten und im folgenden Byte die vier niederwertigsten Bits 0 bis 3 von SV-V-KFZ folgen.

7. Datensignal nach Anspruch 1 oder 2, bei dem der Datenblock als Statusblock ausgebildet ist, mit einem Zeitstempel, einer Statusblockkennzeichnung, einer Statusmeldung, einer Funkuhr, einem ersten Reserveabschnitt, einem zweiten Reserveabschnitt, Maximalgeschwindigkeitsangaben bezüglich der Personenkraftwagen, Maximalgeschwindigkeitsangaben bezüglich der Lastkraftwagen und einem oberen Längengrenzwert zur Abgrenzung Personenkraftwagen/Lastkraftwagen.

8. Datensignal nach Anspruch 1 oder 2, bei dem der Datenblock als Parametrierungsblock ausgebildet ist, mit Maximalgeschwindigkeitsangaben bezüglich der Personenkraftwagen, Maximalgeschwindigkeitsangaben bezüglich der Lastkraftwagen, und einem Längengrenzwert zur Abgrenzung Personenkraftwagen/Lastkraftwagen.

## Claims

1. Data signal for radio-supported transmission of data between traffic data collecting modules and at least one central processing unit, with a Start of Text character (STX) at the beginning of the data signal, an identification signal component, by means of which the sending or receiving traffic data collecting module can be identified, an information byte signal component, by means of which acknowledgements and status information can be exchanged by the central processing unit and the traffic data collecting module involved, a job number signal component, which acts in the call direction as job identifier and in the response direction as acknowledgement identifier, an alternating signal component, which is ignored in the call direction and in the response direction changes each time a data signal is sent, a modem running-slow time signal component, which in the call direction serves as a parameter and in the response direction as status information, a data signal component, which has at least one data identifier and one data block for each data identifier, an End of Text character (ETX) and a error detection character, which is formed from the signal components following the STX character, wherein an XOR link of all the signal components between the STX character and the ETX character, reduced to seven bits, takes place and wherein in all the signal components between the STX character and the ETX character and also in the error detection character the Most Significant Bit (MSB) is permanently set at the value "1".

2. Data signal according to claim 1, the identification signal component of which is constructed as a, preferably four-figure, identification number allocated to the sending or receiving traffic data collecting module.

3. Data signal according to claim 1 or 2, in which the data block is constructed as a traffic data block having at least one measured value block and one character for the number of measured value blocks present, wherein each measured value block has a time stamp for the recording time, one byte for the number of the at least one data recording unit belonging to the measured value block, each data recording unit preferably having fourteen bytes, the first of which indicates the address datum of the data recording unit and the further of which indicate the total number of vehicles recorded (Q-KFZ), the total number of private vehicles recorded (Q-PKW), the total number of commercial vehicles recorded (Q-LKW), the average speed of the private vehicles recorded (V-PKW), the average speed of the commercial vehicles recorded (V-LKW), the standard deviation of the vehicle speeds recorded (SV-V-KFZ), the occupancy time of the measuring points by vehicles, the number of faulty measurements in respect of recordings with zero length, implausible and zero occupancies and a measuring point status.

4. Data signal according to claim 1, in which the average speeds of the private vehicles recorded (V-PKW) are divided over 2 bytes, wherein in the first byte bits 0 to 3 are given the priority of the four highest value bits 4 to 7 of V-PKW and in the following byte the four lowest value bits 0 to 3 of V-PKW follow.

5. Data signal according to claim 3 or 4, in which the average speeds of the commercial vehicles recorded (V-LKW) are divided over 2 bytes, wherein in the first byte bits 0 to 3 are given the priority of the four highest value bits 4 to 7 of V-LKW and in the following byte the four lowest value bits 0 to 3 of V-LKW follow.

6. Data signal according to one of claims 3 to 5, in which the standard deviations of the vehicle speeds recorded (SV-V-KFZ) are divided over 2 bytes, wherein in the first byte bits 0 to 3 are given the priority of the four highest value bits 4 to 7 of SV-V-KFZ and in the following byte the four lowest value bits 0 to 3 of SV-V-KFZ follow.

7. Data signal according to claim 1 or 2, in which the data block is constructed as a status block, with a time stamp, a status block identification, a status message, a radio clock, a first reserve section, a second reserve section, maximum speed data in respect of the private vehicles, maximum speed data in respect of the commercial vehicles and an upper length limit value for delimiting private and commercial vehicles.

8. Data signal according to claim 1 or 2, in which the data block is constructed as a parameterising block, with maximum speed data in respect of the private vehicles, maximum speed data in respect of the commercial vehicles and a length limit value for delimiting private and commercial vehicles.

## Revendications

1. Signal de données qui est destiné à la transmission par radio de données entre des modules collecteurs de données de trafic et au moins une unité centrale et qui comporte un caractère Start of Text (STX) au début du signal de données, une partie de signal d'identification au moyen de laquelle le module collecteur de données de trafic émetteur ou récepteur peut être identifié, une partie de signal d'octet d'information au moyen de laquelle des accusés de réception et des informations d'état peuvent être échangés par l'unité centrale et par le module collecteur de données de trafic concerné, une partie de signal de numéro de tâche qui sert d'indicateur de tâche dans le sens de l'appel et d'indicateur d'accusé de réception dans le sens de la réponse, une partie de signal de changement qui est ignorée dans le sens de l'appel et qui change à chaque signal de données émis dans le sens de la réponse, une partie de signal de temps de poursuite de modem qui sert de paramètre dans le sens de l'appel et d'information d'état dans le sens de la réponse, une partie de signal de données qui comporte au moins un indicateur de données et un bloc de données par indicateur de données, un caractère End of Text (ETX) et un caractère de contrôle qui est formé à partir des parties de signal qui suivent le caractère STX, une combinaison XOR réduite à sept bits s'effectuant sur toutes les parties de signal entre le caractère STX et le caractère ETX et le Most Significant Bit (MSB) étant fixé à la valeur "1" pour toutes les parties de signal entre le caractère STX et le caractère ETX ainsi que pour le caractère de contrôle.

2. Signal de données selon la revendication 1, dont la partie de signal d'identification est conçue comme un numéro d'identification, de préférence à quatre chiffres, associé au module collecteur de données de trafic émetteur ou récepteur.

3. Signal de données selon la revendication 1 ou 2, dans lequel le bloc de données est conçu comme un bloc de données de trafic qui comporte au moins un bloc de valeurs mesurées et un caractère pour le nombre des blocs de valeurs mesurées existants, chaque bloc de valeurs mesurées comportant une marque temporelle pour l'instant de détection, un octet pour le nombre des unités de détection de données appartenant au bloc de valeurs mesurées - il y en a au moins une -, chaque unité de détection de données comportant de préférence quatorze octets dont le premier indique l'adresse de l'unité de détection de données et dont les suivants indiquent le nombre total des véhicules automobiles détectés (Q-KFZ), le nombre total des voitures particulières détectées (Q-PKW), le nombre total des camions détectés (Q-LKW), la vitesse moyenne des voitures particulières détectées (V-PKW), la vitesse moyenne des camions détectés (V-LKW), l'écart type des vitesses de véhicules automobiles détectées (SV-V-KFZ), le temps d'occupation des points de mesure par des véhicules automobiles, le nombre de mesures erronées, à savoir des détections de longueurs nulles, d'occupations invraisemblables et nulles, et un état de point de mesure.

4. Signal de données selon la revendication 1, dans lequel les vitesses moyennes des voitures particulières détectées (V-PKW) sont réparties sur 2 octets, les bits 0 à 3 dans le premier octet recevant la valeur des quatre bits de poids fort 4 à 7 de V-PKW et les quatre bits de poids faible 0 à 3 de V-PKW se trouvant dans l'octet suivant.

5. Signal de données selon la revendication 3 ou 4, dans lequel les vitesses moyennes des camions détectés (V-LKW) sont réparties sur 2 octets, les bits 0 à 3 dans le premier octet recevant la valeur des quatre bits de poids fort 4 à 7 de V-LKW et les quatre bits de poids faible 0 à 3 de V-LKW se trouvant dans l'octet suivant.

6. Signal de données selon l'une des revendications 3 à 5, dans lequel les écarts types des vitesses de véhicules automobiles détectées (SV-V-KFZ) sont répartis sur deux octets, les bits 0 à 3 dans le premier octet recevant la valeur des quatre bits de poids fort 4 à 7 de SV-V-KFZ et les quatre bits de poids faible 0 à 3 de SV-V-KFZ se trouvant dans l'octet suivant.

7. Signal de données selon la revendication 1 ou 2, dans lequel le bloc de données est conçu comme un bloc d'état avec une marque temporelle, un indicateur de bloc d'état, un message d'état, une horloge radio, une première section réservée, une deuxième section réservée, des indications de vitesse maximale pour les voitures particulières, des indications de vitesse maximale pour les camions et une valeur limite supérieure de longueur pour distinguer voitures particulières et camions.

8. Signal de données selon la revendication 1 ou 2, dans lequel le bloc de données est conçu comme un bloc de paramétrage avec des indications de vitesse maximale pour les voitures particulières, des indications de vitesse maximale pour les camions et une valeur limite supérieure de longueur pour distinguer voitures particulières et camions.
